**Europäisches Patentamt**

**European Patent Office**

**Office européen des brevets**

(19)

(11) Veröffentlichungsnummer : **0 487 486 A1**

(12) # EUROPÄISCHE PATENTANMELDUNG

(21) Anmeldenummer : **91890118.2**

(22) Anmeldetag : **31.05.91**

(51) Int. Cl.$^5$ : **F01N 3/02, F01N 7/08**

(30) Priorität : **19.11.90 AT 2331/90**

(43) Veröffentlichungstag der Anmeldung :
**27.05.92 Patentblatt 92/22**

(84) Benannte Vertragsstaaten :
**AT BE CH DE DK ES FR GB GR IT LI LU NL SE**

(71) Anmelder : **Holzinger, Herbert**
**Alte-Linzer-Strasse 16 Engerwitzdorf**
**A-4040 Linz (AT)**

(72) Erfinder : **Holzinger, Herbert**
**Alte-Linzer-Strasse 16 Engerwitzdorf**
**A-4040 Linz (AT)**

(74) Vertreter : **Hübscher, Heiner, Dipl.-Ing. et al**
**Spittelwiese 7**
**A-4020 Linz (AT)**

(54) **Abgasreinigungsanlage für Dieselmotoren.**

(57) Eine Abgasreinigungsanlage für Dieselmotoren umfaßt ein in die Abgasleitung eingebundenes, ein Rußfilter aufnehmendes Filtergehäuse (2, 24). Um eine nahezu vollständige Entrußung der Abgase zu erreichen, besteht das Rußfilter aus einem textilen Membranfilter (29) oder einem Keramikfilter (3) od. dgl., dessen abgasbeaufschlagbare Anströmfläche so bemessen ist, daß die durchschnittliche Anströmgeschwindigkeit der Abgase höchstens 5 cm/sec beträgt.

FIG.1

Die Erfindung bezieht sich auf eine Abgasreinigungsanlage für Dieselmotoren, mit einem in die Abgasleitung eingebundenen, ein Rußfilter aufnehmenden Filtergehäuse.

Bei Dieselmotoren hängt die Abgasreinigung entscheidend mit der Frage einer wirkungsvollen Entrußung zusammen und die Rußfilter bekannter Abgasreinigungsanlagen können bisher nicht befriedigen. Solche Rußfilter bestehen nämlich aus einem Edelstahlwolle-Filter, das in einer dichten Packung dem Auspuffkrümmer des Motors nachgeordnet ist und hier im Nahbereich des Motors nicht nur zu Platzproblemen führt, sondern auch einer hohen Temperaturbelastung ausgesetzt ist und wegen seines hohen Durchströmwiderstandes die Druckverhältnisse ungünstig beeinflußt. Darüber hinaus können die Rußteilchen auf Grund der hohen Anströmgeschwindigkeiten und der Großporigkeit des Stahlfilters die bekannten Filter durchdringen, so daß es zu keiner höheren Anforderungen gerecht werdenden Entrußung kommt, und außerdem muß der Ruß zur Filterrreinigung durch Einspritzen von Aceton od. dgl. abgebrannt werden, was aufwendig und vor allem auch umwelt-belastend ist.

Der Erfindung liegt daher die Aufgabe zugrunde, diese Mängel zubeseitigen und eine Abgasreinigunsanlage der eingangs geschilderten Art zu schaffen, die sich durch ihren einfachen Aufbau und vor allem durch ihre hervorragende Entrußungswirkung auszeichnet.

Die Erfindung löst diese Aufgabe dadurch, daß das Rußfilter aus einem textilen Membranfilter oder einem Keramikfilter od. dgl. besteht, dessen abgasbeaufschlagbare Anströmfläche so bemessen ist, daß die durchschnittliche Anströmgeschwindigkeit der Abgase höchsens 5 cm/sec, vorzugsweise 1 - 3 cm/sec, beträgt. Polytetrafluoräthylen (PTFE)-Membran-Filtermedien oder andere textile Membranfilter sind mikroporöse, auf Gewebeoder Nadelfilzträgern aufgebrachte Membrane aus dünnsten Fasern, bei denen die Partikelabscheidung schon an der Oberfläche der Filtermedien erfolgt und den gewünschten Abscheidegrad mit sich bringen, und Filterelemente aus Faserkeramik haben sich ebenfalls bereits wegen ihrer hohen chemischen Beständigkeit und ihrer Unempfindlichkeit gegenüber Temperaturschwankungen bestens bewährt. Diese Filter führen auch, wie entsprechende Versuche bewiesen haben, bei Abgasreinigungsanlagen zum angestrebten Ergebnis. Allerdings muß dafür gesorgt sein, daß die durchschnittliche Anströmgeschwindigkeit der Abgase einen Höchstwert von 5 cm/sec nicht übersteigt, da sonst die Rußteilchen zu stark in das Filter eindringen und dadurch nicht nur das Abreinigen der Filter wesentlich erschweren, sondern auch die Filterwirkung selbst beeinträchtigen. Die mit entsprechend geringer Geschwindigkeit durch das Filter strömenden Abgase werden hingegen praktisch vollständig vom Ruß befreit, der sich locker an der Anströmfläche des Filters absetzt und von hier problemlos durch Eschütterungen, Vibrationen oder durch eine Luftbeaufschlagung entfernt werden kann. Um sicherzustellen, daß die Abgasanströmgeschwindigkeit das erlaubte Maß nicht übersteigt, muß in Abhängigkeit von der anfallenden Abgasmenge die Anströmfläche der Filter groß genug bemessen werden, wobei dieser Dimensionierung der Filter ja grundsätzlich keine Grenzen gesetzt sind. Da das Filter an beliebiger Stelle der Abgasleitung, vorzugsweise am Leitungsende, angeordnet werden kann, läßt sich durchaus ein Aufstellungsort finden, der die Anordnung auch großflächiger Filter erlaubt.

Sind dem Filter Luftdüsen zur Druckluftbeaufschlagung zugeordnet, kann der sich an der Anströmfläche des Filters absetzende Ruß durch kurze Druckluftstöße abgeblasen werden, wodurch sich unabhängig von eventuellen mechanischen, fahrzeugbedingten Erschütterungen od. dgl. die Filter sicher sauberhalten lassen. Die Luftdüsen können an eine eventuell vorhandene Druckluftquelle, aber auch an ein entsprechendes Gebläseaggregat od. dgl. angeschlossen sein. Da die Rußteilchen wegen der geringen Anströmgeschwindigkeiten nur an der Oberfläche sitzen und auch nur lose haften, kommt es zu einer schnellen und durchgreifenden Abreinigung der Filter, wobei ein gewisser Rußbesatz durchaus wünschenswert ist, um durch entsprechende Reaktion auch andere Schadstoffe aus dem Abgas beseitigen zu können.

Vorteilhaft ist es, wenn das Filter in mehrere, parallelgeschalteten Strömungswegen zugeordnete Filterplatten aufgeteilt ist, da durch eine solche Aufteilung auch bei großflachigen Filtern das Filtergehäuse in seiner Form und Größe variabler zu gestalten und besser an die baulichen Gegebenheiten anzupassen ist. Abgesehen davon, führen die Aufteilung des Abgasstromes und die Mehrzahl von Filterplatten zu einer Verbesserung der ohnehin schon guten schalldämmenden Wirkung der Filtereinrichtung.

Eine besonders zweckmäßige Konstruktion ergibt sich, wenn die Filterplatten stehend und mit Abstand nebeneinander angeordnet sind, wobei die Zwischenräume zwischen jeweils zwei Platten abwechselndeinen Anström- bzw. Abströmkanal bilden, welche Anströmkanäle von einer unteren Verteilerkammer ausgehen und welche Abströmkanäle in eine obere Sammelkammer münden. Der Abgasstrom wird über die Verteilerkammer den einzelnen Filterplatten zugeteilt, so daß sich für jede Platte die entsprechend niedrige Anströmgeschwindigkeit ergibt. Dennoch bleibt der Raum gut genützt und, da die Verteilerkammer bzw. Sammelkammer als Doppelboden bzw. -decke des Filtergehäuses ausgebildet sein kann, ist gleichzeitig eine verhältnismäßig robuste und stabile Konstruktion sichergestellt.

Weist die Verteilerkammer in einem der Abgaseintrittsöffnung abgewandten Bodenbereich eine Ruß-Auffangrinne mit einer Anschlußöffnung zum Ansatz eines Rußbehälters auf, kann der von den Filtern abfallende Ruß, der durch Erschütterungen oder Luftbeaufschlagung u. dgl. von der Filteroberfläche gelöst wird, durch die Verteilerkammer direkt dem Rußbehälter zugebracht werden, was durch die einströmenden Abgase selbst oder auch mit Hilfe der Luftdüsen oder eine entsprechend schräge Rutschfläche des Gehäusebodens u. dgl. verwirklicht wird.

Eine besonders rationelle Konstruktion ergibt sich, wenn das Filter in einzelne sackförmige Filtertaschen aufgeteilt ist, die mit einem Halterahmen nebeneinandergereiht in einem eine Abtrennung zwischen einer Abgas-Zuströmkammer und einer Abgas-Abströmkammer bildenden Filterhalter sitzen. Die Filtertaschen erlauben eine ausgezeichnete Raumnutzung und bringen selbst die Strömungswege für die Abgase mit sich, die aus der Zuströmkammer in die Filtertaschen eindringen und durch diese dann in die Abströmkammer gelangen. Es kommt auf kleinem Raum zu großen Filteroberflächen, die Filtertaschen lassen sich mit ihren Halterahmen schnell ein- und ausbauen und es genügt ein Zwei-Kammer-Gehäuse, dessen Trennwand gleichzeitig als Halterung für die Filtertaschen dient.

Weist ein sich unterhalb der Filtertaschen quer durch die Zuströmkammer erstreckendes Düsenrohr die Luftdüsen auf, die jeweils zwischen zwei Filtertaschen liegen, und ist das Düsenrohr dreh- und vorzugsweise über einen Schrittmotor antreibbar gelagert, können alle Filtertaschen auf einmal durch eine Drehung des Düsenrohres großflächig mit Luft beaufschlagt und abgereinigt werden, wobei mit einem Schrittmotor ein schrittweises Drehen und damit ein abschnittsweises Reinigen erfolgen kann.

Ist im Bodenbereich der Zuströmkammer ein Absaugstutzen zum Anschluß einer Absaugleitung od. dgl. vorgesehen, läßt sich durch eine Kombination von Absaugen und Luftbeaufschlagen eine optimale Filterreinigung erzielen.

Um eine vollständige Entrußung und/oder Entstaubung auf jeden Fall sicherzustellen und auch eine weitere Abgasreinigung erreichen zu können, ist es möglich, dem Filter ein Feinfilter aus Steinwolle od. dgl. nachzuschalten, in dem die bereits entrußten Abgase nochmals gefiltert werden, so daß unabhängig vom Betriebszustand im wesentlich rußfreie Abgase ins Freie gelangen. Auch kann dem Filter ein Abgaskühler vorgeordnet sein, um gegebenenfalls die Temperatur der zu filternden Abgase zu senken und die Temperaturbelastung der Filter zu verringern.

Gemäß einer vorteilhaften Ausgestaltung der Erfindung weist bei Dieselmotoren von Fahrzeugen ein Teil oder ein Zusatz des Fahrzeugaufbaues bzw. der Karosserie das Filtergehäuse auf, wobei vorzugsweise das Filtergehäuse einen mit einem Windleitblech od. dgl. versehenen Dachaufsatz bildet. So ist auch bei großraumigen Filteranlagen eine zweckmäßige Platzaufteilung möglich und die Reinigungsanlage läßt sich gut in das Gesamtkonzept des Fahrzeugaufbaues integrieren. Das Filtergehäuse kann beispielsweise in eine Doppelwandung des Fahrzeugaufbaues eingebaut werden oder an einer anderen geeigneten Stelle, doch besonders eignet sich für das Filtergehause ein Dachaufsatz, da am Dach der Fahrkabine oder des Fahrzeugaufbaues ausreichend Platz vorhanden ist, gute Kühlmöglichkeiten herrschen usw.. Das Gehäuse kann dabei als Traggestell für Gepäckträger od. dgl. oder besonders gut auch zum Aufbau eines Spoilers usw. genutzt werden, wozu es lediglich mit einem Windleitblech od. dgl. versehen zu werden braucht.

In der Zeichnung ist der Erfindungsgegenstand rein schematisch veranschaulicht, und zwar zeigen

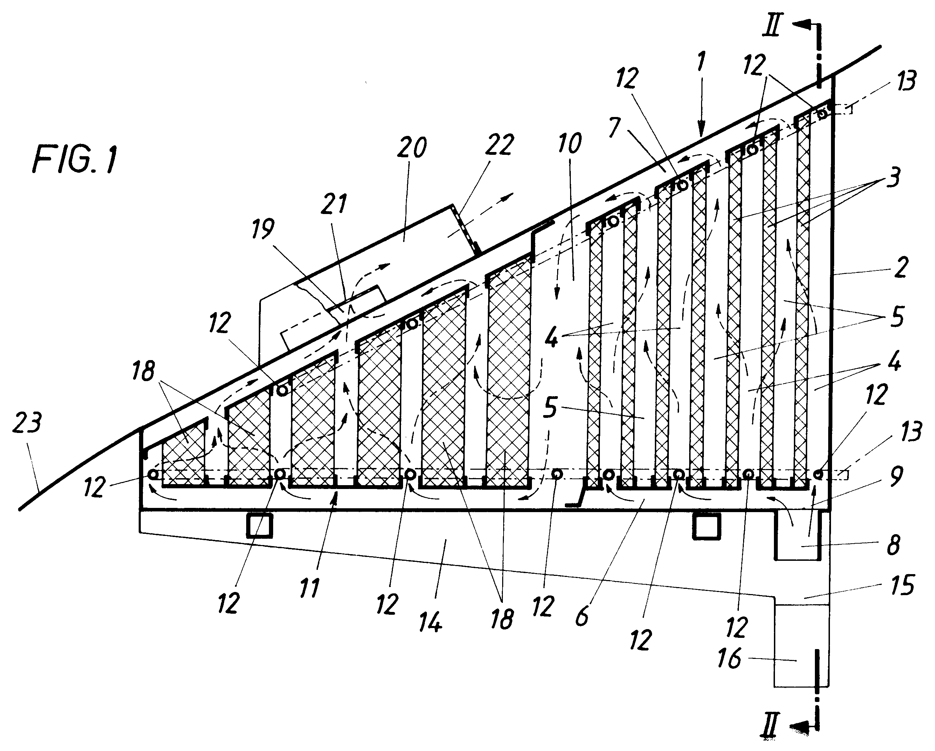

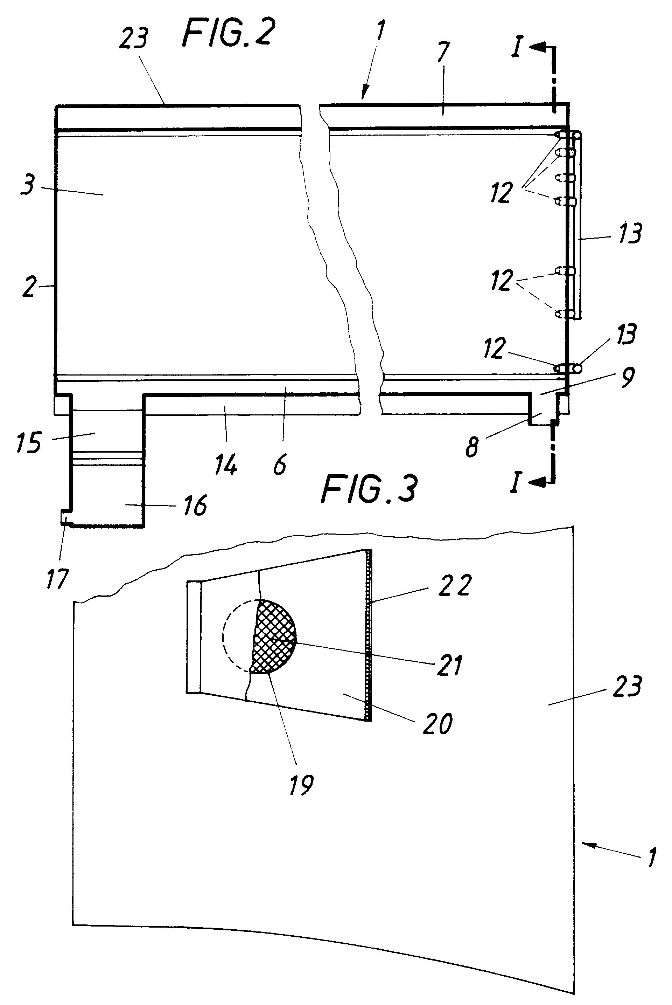

Fig. 1 eine erfindungsgemäße Abgasreinigungsanlage im vertikalen Längsschnitt nach der Linie I-I der Fig. 2,

Fig. 2 einen vertikalen Querschnitt durch die Anlage gemäß der Linie II-II der Fig. 1 in kleinerem Maßstab und

Fig. 3 eine Draufsicht ebenfalls im kleineren Maßstab, sowie

Fig. 4 und 5 ein weiteres Ausführungsbeispiel der Filtereinrichtung einer erfindungsgemäßen Abgasreinigungsanlage im Horizontalschnitt bzw. im Vertikalschnitt nach den Linien IV - IV bzw. V - V der Fig. 5 bzw. Fig. 4.

Um die Abgase eines Dieselmotors, vorzugsweise eines Fahrzeugmotors, praktisch vollständig entrußen zu können, umfaßt die nicht weiter dargestellte Abgasreinigungsanlage eine Filtereinrichtung 1, die aus einem rußfilterbestückten Filtergehäuse 2 besteht. als Rußfilter sind Filterplatten 3 aus Faserkeramik vorgesehen, die stehend und mit Abstand nebeneinander im Filtergehäuse 2 sitzen. Die Zwischenräume zwischen den einzelnen Filterplatten 3 bilden jeweils abwechselnd einen Anströmkanal 4 und einen Abströmkanal 5, welche Anströmkanäle 4 von einer unteren Verteilerkammer 6 ausgehen und welche Abströmkanäle 5 in eine obere Sammelkammer 7 münden. Das Filtergehäuse 2 weist einen Anschlußstutzen 8 mit einer in die Verteilerkammer 6 führenden Abgaseintrittsöffnung 9 auf, so daß die durch die nicht weiter dargestellte, an den Anschlußstutzen 8 angesetzte Abgasleitung zuströmenden Abgase in die Verteilerkammer 6 einströmen und von hier, in mehrere parallelgeschaltete Strömungswege aufgeteilt, in die Anströmkanäle 4 gelangen. Nun müssen sie durch die Filterplatten 3 hindurch in die Abströmkanäle 5 und von dort in die Sammelkammer 7 strömen, von wo ein Verbindungskanal 10 zu einem Feinfilter 11 führt.

Die Filterplatten 3 sind mit ihrer gesamten Anströmfläche so bemessen, daß die Anströmgeschwindigkeit der Abgase höchstens 5 cm/sec beträgt und die mitgeführten Rußteilchen an der Oberfläche der Filterplatten 3 lose hängen bleiben. Beim Durchtritt durch die Platten kommt es zu einer fast vollständigen Entrußung der Abgase, wobei die Filterplatten durch Erschütterungen oder durch eine Druckluftbeaufschlagung problemlos abgereinigt werden können und stets einwandfreie Filterunsverhältnisse aufrecht zu erhalten sind. Zur Druckluftbeaufschlagung sind anströmseitig zwischen den Filterplatten 3 Luftdüsen 12 installiert, die über nur angedeutete Zuluftleitungen 13 mit einer Druckluftquelle, einem Lüfteraggregat od. dgl. in Verbindung stehen und impulsartig mit Druckluft beaufschlagt werden können, um die Abreinigung zu erreichen. Die Luftdüsen 12 sind dabei auf der der Abgaseintrittsöffnung 9 zugekehrten Gehäuseseite angeordnet und zur gegenüberliegenden Seite hin gerichtet, so daß der abfallende Ruß nicht gegen die Einströmrichtung der Abgase entfernt werden muß. Zum Austragen des abfallenden Rußes ist in dem der Abgaseintrittsöffnung 9 abgewandten Bodenbereich des Filterghäuses 2 eine Ruß-Auffangrinne 14 vorgesehen, die an die Verteilerkammer 6 seitlich anschließt und eine Anschlußöffnung 15 zum Ansatz eines Rußbehälters 16 aufweist. Der ausgefilterte Ruß läßt sich so ohne Unterbrechung des Betriebes und mit wenigen Handgriffen mittels des Rußbehälters 16 entleeren, wobei durch eine Saugöffnung 17 auch ein Aussaugen des Behälters durch ein Absaugegerät möglich ist.

Um das Reinigen der Abgase zu optimieren, ist dem Rußfilter aus den Filterplatten 3 ein Feinfilter 11 nachgeordnet, das aus Steinwolle-Filterplatten 18 besteht und ähnlich wie das Grobfilter zur Entrußung aufgebaut ist. Die feingefilterten und damit auch vollkommen rußfreien Abgase treten durch eine Abgasöffnung 19 aus dem Filtergehäuse 2 aus und strömen durch eine schützende Abdeckhaube 20 ins Freie, wobei Schutzgitter 21, 22 über die Abgasöffnung 19 und die Haube 20 gespannt sind.

Um bei Fahrzeugen die verhältnismäßig großvolumige Filtereinrichtung 1 zweckmäßig unterbringen zu können, sind die Filtergehäuse 2 vorzugsweise als Teile oder Zusätze des Fahrzeugaufbaues ausgebildet. Besonders gut eignet sich ein solches Filtergehäuse 2 als Dachaufsatz einer Fahrerkabine od. dgl., wo es mit einem Windleitblech 23 versehen sein kann und damit gleichzeitig als Dachspoiler Verwendung findet.

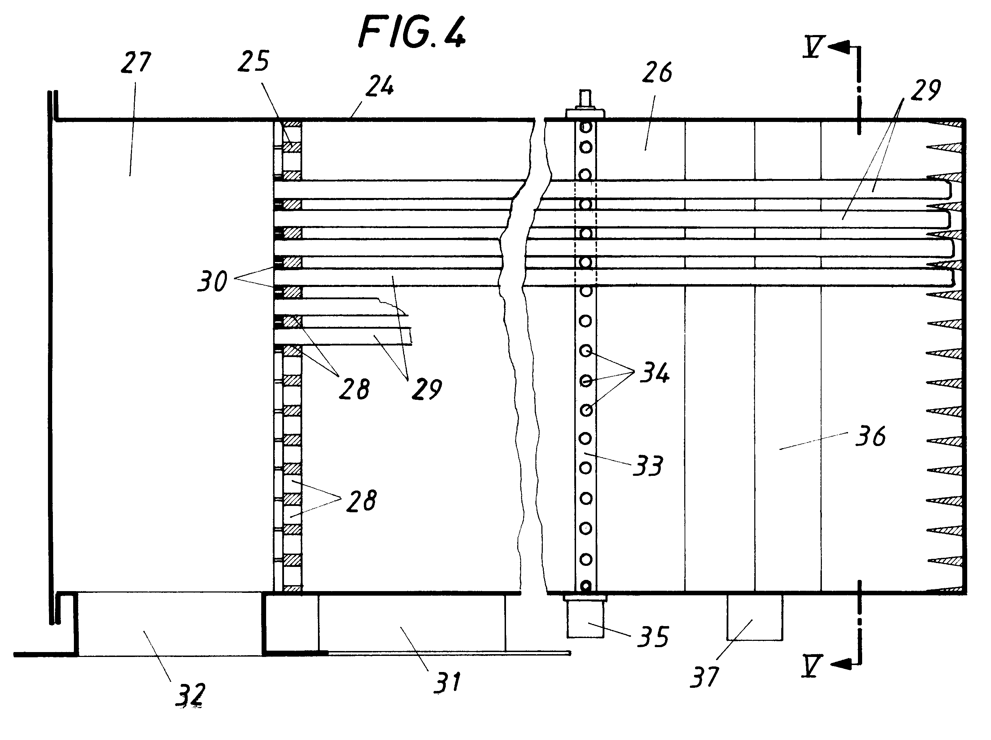

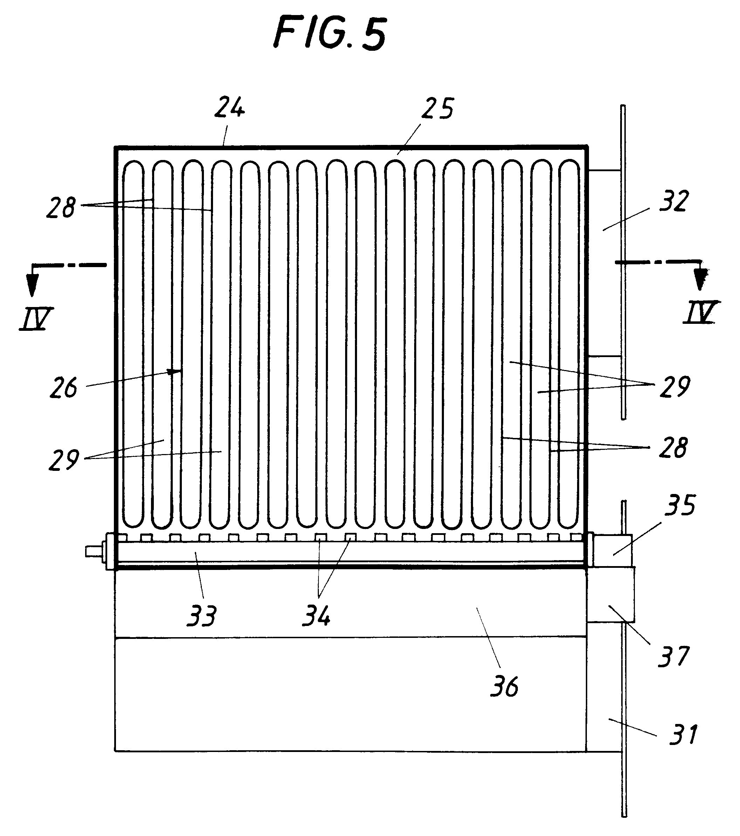

Gemäß dem Ausführungsbeispiel nach Fig. 4 und 5 ist ein kastenförmiges Filtergehäuse 24 vorgesehen, das durch eine Trennwand 25 in eine Zuströmkammer 26 und eine Abströmkammer 27 unterteilt ist. Die Trennwand 25 weist Einsteckschlitze 27 zum Einsetzen sackartiger Filtertaschen 29 auf und dient so gleichzeitig als Filterhalter. Die Filtertaschen bestehen aus einer textiler Filtermembran, die auf einem Halterahmen 30 aufgezogen ist, und werden einfach in die Einsteckschlitze 28 eingeschoben, so daß der Sackteil in die Zuströmkammer 26 ragt. Die Abgase, die durch einen Einlaßstutzen 31 in die Zuströmkammer 26 dringen, müssen nun die Filtertaschen 29 durchströmen, um in die Abströmkammer 27 und durch diese zum Auslaßstutzen 32 zu gelangen, so daß sie auf diesem Weg zwangsweise entrußt werden.

Um die Filtertaschen 29 abreinigen zu können, gibt es unterhalb der Taschen in der Zuströmkammer 26 ein Düsenrohr 33, das zwischen die Taschen 29 gerichtete Luftdüsen 34 aufweist und über einen Schrittmotor 35 drehbar ist. Durch Luftbeaufschlagung des Düsenrohres 33 können so alle Filtertaschen auf einmal abgeblasen werden, wobei durch ein schrittweises Drehen die ganze Taschenoberfläche Schritt für Schritt erfaßt wird. Zur Unterstützung der Abreinigung ist im Bodenbereich eine rinnenförmige Absenkung 36 mit einem Absaugstutzen 37 vorgesehen, an den eine Absaugleitung zum Absaugen des verwirbelten Rußes angeschlossen werden kann.

**Patentansprüche**

1. Abgasreinigungsanlage für Dieselmotoren, mit einem in die Abgasleitung eingebundenen, ein Rußfilter aufnehmenden Filtergehäuse (2, 24), dadurch gekennzeichnet, daß das Rußfilter aus einem textilen Membranfilter (29) oder einem Keramikfilter (3) od. dgl. besteht, dessen abgasbeaufschlagbare Anströmfläche so bemessen ist, daß die durchschnittliche Anströmgeschwindigkeit der Abgase höchstens 5 cm/sec, vorzugsweise 1 - 3 cm/sec beträgt.

2. Abgasreinigungsanlage nach Anspruch 1, dadurch gekennzeichnet, daß dem Filter (3, 29) Luftdüsen (12, 34) zur Druckluftbeaufschlagung zugeordnet sind.

3. Abgasreinigungsanlage nach Anspruch 1 oder 2, dadurch gekennzeichnet, daß das Filter in mehrere, parallelgeschalteten Strömungswegen zugeordnete Filterplatten (3) aufgeteilt ist.

4. Abgasreinigungsanlage nach Anspruch 3, dadurch gekennzeichnet, daß die Filterplatten (3) stehend und mit Abstand nebeneinander angeordnet sind, wobei die Zwischenräume zwischen jeweils zwei Platten (3) abwechselnd einen Anström(4) bzw. einen Abströmkanal (5) bilden, welche Anströmkanäle (4) von einer

4

unteren Verteilerkammer (6) ausgehen und welche Abströmkanäle (5) in eine obere Sammelkammer (7) münden.

5. Abgasreinigungsanlage nach Anspruch 4, dadurch gekennzeichnet, daß die Verteilerkammer (6) in einem der Abgaseintrittsöffnung (9) abgewandten Bodenbereich eine Rußauffangrinne (14) mit einer Anschlußöffnung (15) zum Ansatz eines Rußbehälters (16) aufweist.

6. Abgasreinigungsanlage nach Anspruch 1 oder 2, dadurch gekennzeichnet, daß das Filter in einzelne sackförmige Filtertaschen (29) aufgeteilt ist, die mit einem Halterahmen (30) nebeneinandergereiht in einem eine Abtrennung zwischen einer Abgas-Zuströmkammer (26) und einer Abgas-Abströmkammer (27) bildenden Filterhalter (25, 28) sitzen.

7. Abgasreinigungsanlage nach Anspruch 2 und 6, dadurch gekennzeichnet, daß ein sich unterhalb der Filtertaschen (29) quer durch die Zuströmkammer (26) erstreckendes Düsenrohr (33) die Luftdüsen (34) aufweist, die jeweils zwischen zwei Filtertaschen (29) liegen, und daß das Düsenrohr (33) dreh- und vorzugsweise über einen Schrittmotor antreibbar gelagert ist.

8. Abgasreinigungsanlage nach Anspruch 7, dadurch gekennzeichnet, daß im Bodenbereich der Zuströmkammer (26) ein Absaugstutzen (36) zum Anschluß einer Absaugleitung vorgesehen ist.

9. Abgasreinigungsanlage nach einem der Ansprüche 1 bis 8, dadurch gekennzeichnet, daß dem Filter (3) ein Feinfilter (11) aus Steinwolle (18) od. dgl. nach- und/oder ein Abgaskühler vorgeordnet ist.

10. Abgasreinigungsanlage nach einem der Ansprüche 1 bis 9, dadurch gekennzeichnet, daß bei Dieselmotoren von Fahrzeugen ein Teil oder Zusatz des Fahrzeugaufbaues bzw. der Karosserie als Filtergehäuse (2) vorgesehen ist, wobei vorzugsweise das Filtergehäuse (2) einen mit einem Windleitblech (23) od. dgl. versehenen Dachaufsatz bildet.

**FIG.1**

FIG.2

FIG.3

FIG.4

# FIG.5

EP 0 487 486 A1

**Europäisches Patentamt**

# EUROPÄISCHER RECHERCHENBERICHT

Nummer der Anmeldung

EP 91 89 0118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 634 360 (WEBER) | 1 | F01N3/02 |
| Y | * Spalte 1, Zeile 58 - Spalte 2, Zeile 53 * | 2-5,9 | F01N7/08 |
| | --- | | |
| Y | EP-A-0 308 972 (ASAHI) | 2-5 | |
| | * Spalte 6, Zeile 50 - Spalte 8, Zeile 56 * | | |
| | * Spalte 11, Zeile 51 - Zeile 54; Abbildung 1 * | | |
| | --- | | |
| Y | DE-A-3 522 431 (DAIMLER-BENZ) | 9 | |
| | * Spalte 2, Zeile 34 - Spalte 3, Zeile 47; Abbildung * | | |
| | --- | | |
| A | PATENT ABSTRACTS OF JAPAN | 6,7 | |
| | vol. 004, no. 069 (C-011)22. Mai 1980 | | |
| | & JP-A-55 035 941 ( ENDO RYOSAKU ) 13. März 1980 | | |
| | * Zusammenfassung * | | |
| | --- | | |
| A | EP-A-0 220 505 (MAN) | 9 | |
| | * Zusammenfassung; Anspruch 9; Abbildung 1 * | | |
| | --- | | |
| A | EP-A-0 308 525 (ASAHI) | | |
| | --- | | **RECHERCHIERTE SACHGEBIETE (Int. Cl.5 )** |
| A | SOVIET INVENTIONS ILLUSTRATED | | |
| | Section Ch, Week 8830, 7. Januar 1988 | | |
| | Derwent Publications Ltd., London, GB; | | F01N |
| | Class A, AN 88211423 | | |
| | & SU-A-1 364 356 (IVAN FILM) | | |
| | * Zusammenfassung * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 11 FEBRUAR 1992 | SIDERIS MARIOS |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes Dokument

EPO FORM 1503 03.82 (P0403)

10